# EUROPEAN PATENT SPECIFICATION

(11) **EP 0 688 273 B1**
(45) Date of publication and mention of the grant of the patent: **24.09.1997**
(21) Application number: 92918345.7
(22) Date of filing: 06.07.1992
(51) Int. Cl.: B60N 2/48, B60N 2/36

(54) **NECK PROTECTION FOR FOLDABLE BACK SUPPORT OF A VEHICLE**
NACKENSCHUTZ FÜR FALTBARE RÜCKENSTÜTZE EINES FAHRZEUGS
DISPOSITIF DE PROTECTION NUCALE POUR DOSSIER RABATTABLE DE VEHICULE

(43) Date of publication of application: 27.12.1995
(73) Proprietor: Scandmec AB, S-565 00 Mullsjö (SE); AB VOLVO, 405 08 Göteborg (SE)
(72) Inventor: SKOGWARD, Kenneth, S-561 49 Huskvarna (SE); BJÖRKAMN, Leif, S-415 13 Göteborg (SE)
(74) Representative: Mossmark, Anders
(86) International application number: SE9200505
(87) International publication number: WO9401302

(56) References cited:
- DE-A- 2 932 181
- DE-C- 3 306 188
- US-A- 3 021 098

## Description

### TECHNICAL FIELD

The present invention relates to a head restraint for a backrest in a vehicle which backrest is foldable in the vehicle's longitudinal direction and which is provided with an inner framework which is pivotally supported at a first pivot location.

### BACKGROUND ART

Vehicle seats with backrests according to the above are often used in passenger cars of estate or touring type in order to allow an increase of the vehicle's luggage space.

It is known that head restraints have a considerable effect in preventing injury, especially concerning injuries to the neck vertebrae. It is therefore very common also that the back seat in passenger cars is equipped with head restraints. In passenger cars of the estate or touring type it is however desirable that the back seat can be folded down in order to form said luggage space.

An example thereof is known from DE-C-3 306 188, wherein folding of the backrest is obtained by means of a cable connected to a sliding carriage which also operates retraction of the headrest.

In normal passenger compartments, ergonomically shaped head restraints will bump against the front seats and make a complete folding down of the back seat more difficult. If the back seat can not be folded down completely, a sloping load surface is obtained and a luggage space which is difficult to use in a rational manner. This problem can be solved if the head restraints are made raisable and lowerable so that they can be lowered into the backrest before this is folded forwards. However it has shown itself to be the case that people are often negligent with raising up the head rest again when the backrest is folded back. In this case the head restraint will have lost its intended protective effect.

### OBJECT OF THE INVENTION

An object of the present invention is to achieve a head restraint for foldable backrests, which restraint is automatically retracted into the backrest upon folding forwards or backwards and which returns to an active protective position on folding back of the backrest.

An additional object of the invention is to allow adjustment of the head rest within an adjustment range, from which the restraint can be retracted into the backrest when this is folded down and returned when the backrest is folded up.

### SUMMARY OF THE INVENTION

Said object is achieved according to the invention as defined in claim 1. The head restraint is displaceably carried in the framework and connected with a second pivot location in the vehicle which is positioned at a certain distance from the first pivot location in the vehicle's longitudinal direction so that the head restraint is retracted into or against the backrest upon folding this down and is displaced back to an active position upon folding up of the backrest.

Preferred embodiments of the invention are defined in the appended subclaims.

### DESCRIPTION OF FIGURES

One embodiment of the invention will now be described in more detail with reference to the accompanying drawings, in which
- Fig. 1: is a side view showing a part of the passenger compartment with a foldable back seat backrest which is provided with a head restraint according to the invention,
- Fig. 2: shows, on a larger scale, a sleeve member included in the invention,
- Fig. 3 and 4: show, on a somewhat smaller scale, a part of the backrest and head restraint in two different positions, and
- Fig. 5: shows, on an even more reduced scale, the backrest with the head restraint during folding back to its upright position.

### PREFERRED EMBODIMENTS

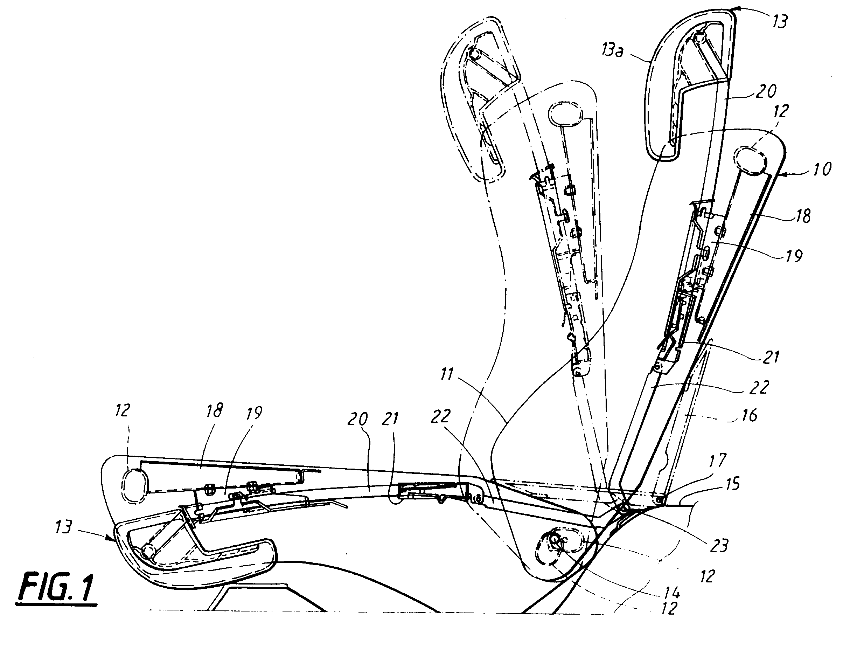

Fig. 1 shows the backrest 10 with its outer upholstery 11 and inner framework 12 in a normally upright position with the head restraint 13 in its uppermost position, an intermediate position shown in dashed lines which represents a forward folding, and a second end position shown in solid lines where the backrest has been folded forwardly to a maximum. Fig. 1 thus represents the sequence of folding the backrest forwards, whereby it is clear that the head restraint is retracted into the back of the seat so that it does not project appreciably beyond this.

The frame 12 of the backrest thus pivots about an axis 14 which is fixedly connected with the vehicle chassis 15. A flap 16 is pivotally mounted in a pivot location 17 behind the backrest 10, so that this can be folded down and form an even bridging between the chassis 15 and the rear side of the backrest.

The framework 12 is provided with a holder 18 for a supporting arrangement 19. This arrangement 19 forms a support for a yoke rod 20, which extends downwardly into the backrest with two legs, from the head restraint's cushion 13a. The support 19 allows displacement of the head restraint upwardly or downwardly with respect to the frame 12.

The lower ends of the rod of the yoke 20 are each connected with a respective sleeve arrangement 21. Each of these sleeve arrangements is in turn connected via a pivotable link arm 22 with a pivot location 23 on the vehicle chassis 15.

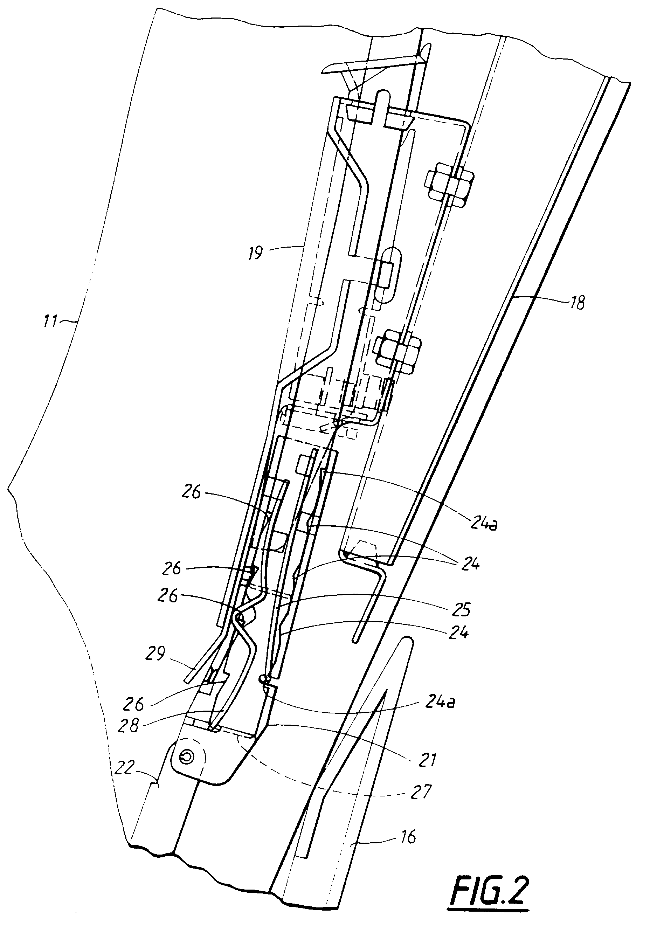

Fig. 2 shows the support 19 and the sleeve arrangement 21 in more detail, from which it is clear that the yoke rod 20 on the rear, right side of the figure is provided with five chamfered notches 24, 24a, which co-operate with a yoke-formed spring member 25. Due to the fact that both outer notches 24a in the row are provided with an abutment edge, whilst the other notches 24 are double chamfered, the end notches form an adjustment range in co-operation with the spring member 25, within which the yoke rod is displaceable.

The yoke rod 20 is provided additionally with a series of notches 26, which together with the end edges 27 on the rod 20 and a second yoke-formed spring member 28, form a blocking mechanism which, due to the chamfering of the notches, only acts in a downward direction. The head restraint 13 can thus be drawn freely upwardly within the adjustment range, but is blocked against lowering. Lowering of the restraint is made possible by this being tilted in a forward direction until the spring 28 is released from a tongue 29 projecting from the support 19, which tongue normally presses the spring member 28 against the yoke rod, whereby the head restraint can be displaced downwardly into the backrest within its adjustment range. Tilting of the head restraint is possible due to the fact that there is a certain movement in the support 19.

The head restraint 13 can, as described above, be positioned at one of five levels within the adjustment range. When the backrest is to be folded down i.e. to the left in the figures, a conventional blocking device which normally keeps the backrest locked in the upright position is released. When the backrest is then folded in a counter clockwise direction in the figures the distance between both pivot locations 14 and 23 will give rise to a tensile force occurring in the link arms 22. The tensile force will pull the sleeve 21 downwardly along its respective yoke rod 20, until the spring means 25 reaches its lower abutment notch 24a. Fig. 1 and 2 show a starting position in which the head restraint is in its uppermost position and the spring 25 is thus already in engagement in said abutment notch.

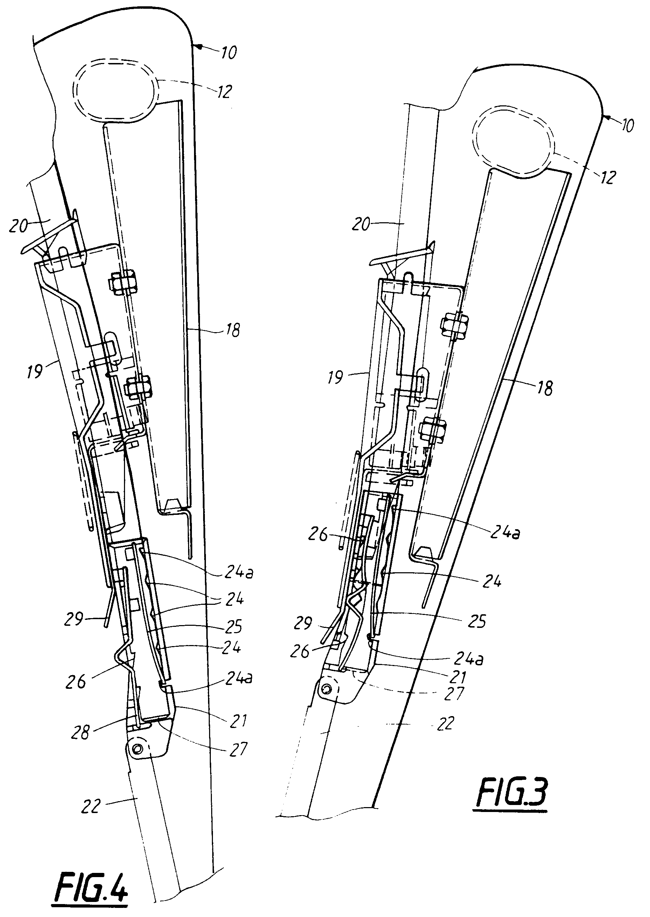

In this position the link arm 22 starts to pull the yoke rod downwardly into the backrest, as is clear from Fig. 4. In this way the tongue 29 is released from the spring member 28 and is thus released from the yoke rod. When folding of the backrest has been completed this assumes the position which is shown in the left part of Fig. 1.

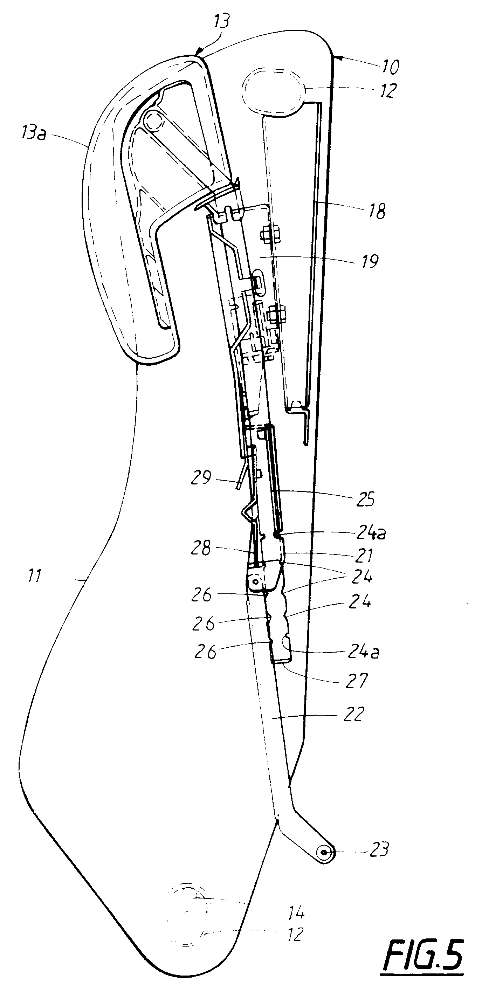

During the folding of the backrest back to its vertical position the head restraint will be moved upwardly in the backrest due to the distance between the pivot locations 14 and 23. At the start of this sequence the sleeve 21 will be pressed upwardly along the respective yoke rod, as a result of the upwardly directed forces from the link arm 22, until the spring member 25 engages against the upper of the two end abutments 24a (see Fig. 5). From this position the sleeve 21 starts to displace the head restraint 13 upwardly. When the movement has finished, the head restraint will be in the lowermost position of the adjustment range, said position not being shown in any of the figures. From this lower active position the restraint 13 can easily be moved upwardly by hand if another adjustment position is desired.

With the head restraint described above there is obtained an automatic reduction of the backrest's length dimension in the folded-down position, which reduction can be up to about 15 cm.

The invention is not limited to that described above but can be varied within the scope of the appended claims. For example the head restraint does not need to he adjustable but can be moved down from, or respectively moved back up to, one and the same active position. Additionally the head restraint according to the invention can be applied to other backrests apart from the back seat, whereby it is easy to modify the mechanism so that the head restraint is drawn into the back rest when this is folded backwardly.

## Claims

1. Head restraint for a backrest (10) in a vehicle, which backrest is foldable forwardly in the vehicle's (15) longitudinal direction and which is provided with an inner framework (12) which is pivotally supported at a first pivot location (14), said head restraint being displaceably carried in the framework (12) and connected with a second pivot location (23) in the vehicle which is positioned at a certain distance from the first pivot location in the vehicle's longitudinal direction, whereby on folding down of the backrest, the head restraint (13) is retracted into or against this and is displaced back to an active position on folding up of the backrest, **characterized** in that it comprises at least one rod-shaped or tube-shaped member (20) which is connected with the second pivot location (23) via at least one sleeve member (21) and one joining member (22) extending between this (21) and the second pivot location (23).

2. Head restraint according to claim 1, in which the backrest is foldable forwards in the vehicle's longitudinal direction, **characterized** in that the second pivot location (23) is positioned behind the first pivot location (14) in the vehicle's longitudinal direction.

3. Head restraint according to claim 2,
**characterized** in that the sleeve member (21) is provided with at least one blocking member (25) which cooperates with any of a series of recesses (24, 24a) in the rod-shaped or tube-shaped member (20), which recesses allow the adjustment of the head restraint into the desired height position within an adjustment range defined by the sleeve member and the recesses.

4. Head restraint according to claim 3,
**characterized** in that the rod-shaped or tube-shaped member (20) is yoke-shaped with two legs extending downwardly into the backrest through supporting means (19) in the framework (12), whereby at least the one rod-shaped or tube-shaped member extends through a sleeve member (21).

5. Head restraint according to claim 4,
**characterized** in that the sleeve member (21) is provided with a second blocking member (28) which allows raising of the head restraint within an adjustment range, but which blocks in the opposite direction, said second blocking means being releasable for lowering of the head restraint.

6. Head restraint according to claim 5,
**characterized** in that the second blocking member (28) is releasable by means of the head restraint being tilted forwardly in the vehicle's longitudinal direction.

## Patentansprüche

1. Kopfstütze für eine Sitzrückenlehne (10) in einem Fahrzeug, wobei die Sitzrückenlehne in der Längsrichtung des Fahrzeugs (15) nach vorn klappbar und mit einem inneren Rahmenaufbau (12) versehen ist, welcher schwenkbar an einer ersten Schwenkstelle (14) gelagert ist, wobei die Kopfstütze in dem Rahmenaufbau (12) verschiebbar gehalten und mit einer zweiten Schwenkstelle (23) in dem Fahrzeug verbunden ist, die in einer bestimmten Entfernung von der ersten Schwenkstelle in der Fahrzeuglängsrichtung angeordnet ist, wobei beim Herunterklappen der Sitzrückenlehne die Kopfstütze (13) in diese hinein oder zu dieser zurückziehbar ist und beim Hochklappen der Sitzrückenlehne zurück in eine aktive Stellung verschiebbar ist,
dadurch gekennzeichnet,
daß die Kopfstütz wenigstens ein stab- bzw. rohrförmiges Teil (20), das mit der zweiten Schwenkstelle (23) über wenigstens ein Hülsenteil (21) verbunden ist, und ein Verbindungsteil (22) aufweist, das sich zwischen diesem Teil (21) und der zweiten Schwenkstelle (23) erstreckt.

2. Kopfstütze nach Anspruch 1, bei der die Sitzrückenlehne in Fahrzeugslängsrichtung nach vorn klappbar ist,
dadurch gekennzeichnet,
daß die zweite Schwenkstelle (23) in Fahrzeugslängsrichtung hinter der ersten Schwenkstelle (14) angeordnet ist.

3. Kopfstütze nach Anspruch 2,
dadurch gekennzeichnet,
daß das Hülsenteil (21) mit wenigstens einem Blockierteil (25) versehen ist, das mit einer Ausnehmung aus einer Reihe von Ausnehmungen (24, 24a) in dem stab- bzw. rohrförmigen Teil (20) zusammenwirkt, wobei diese Ausnehmungen die Einstellung der Kopfstütze in der gewünschten Höhenstellung innerhalb eines Einstellbereichs erlauben, der durch das Hülsenteil und die Ausnehmungen gebildet ist.

4. Kopfstütze nach Anspruch 3,
dadurch gekennzeichnet,
daß das stab- bzw. rohrförmige Teil (20) jochförmig ausgebildet ist, wobei sich die beiden Beine nach unten in die Sitzrückenlehne durch eine Halteeinrichtung (19) in dem Rahmenaufbau (12) erstrecken, wobei sich wenigsten ein rohr- bzw. stabförmige Teil durch ein Hülsenteil (21) erstreckt.

5. Kopfstütze nach Anspruch 4,
dadurch gekennzeichnet,
daß das Hülsenteil (21) mit einem zweiten Blockierteil (28) versehen ist, welches ein Anheben der Kopfstütze innerhalb eines Einstellbereichs ermöglicht, jedoch in der entgegengesetzten Richtung blockiert, wobei die zweite Blockiereinrichtung zum Absenken der Kopfstütze lösbar ist.

6. Kopfstütze nach Anspruch 5,
dadurch gekennzeichnet,
daß das zweite Blockierteil (28) mittels des Vorwärtskippens der Kopfstütze in Fahrzeuglängsrichtung lösbar ist.

## Revendications

1. Organe appui-tête pour dossier (10), le dossier pouvant être penché vers l'avant dans la direction longitudinale du véhicule (15) et ayant un bâti interne (12) supporté afin qu'il puisse pivoter à un premier emplacement (14) de pivotement, l'organe appui-tête étant supporté dans le bâti (12) afin qu'il soit mobile et étant raccordé à un second emplacement (23) de pivotement dans le véhicule, placé à une certaine distance du premier emplacement de pivotement dans la direction longitudinale du véhicule, si bien que, lors de l'inclinaison du dossier vers le bas, l'organe appui-tête (13) recule dans le dossier ou contre celui-ci et est déplacé vers une position active lors de la remontée du dossier, caractérisé en ce qu'il comprend au moins un organe (20) en forme de tige ou de tube qui est raccordé au second emplacement (23) de pivotement par au moins un organe (21) en forme de manchon et un organe de jonction (22) placé entre cet emplacement (21) et le second emplacement de pivotement (23).

2. Organe appui-tête selon la revendication 1, dans lequel le dossier peut être penché vers l'avant dans la direction longitudinale du véhicule, caractérisé en ce que le second emplacement de pivotement (23) est placé derrière le premier emplacement de pivotement (14) dans la direction longitudinale du véhicule.

3. Organe appui-tête selon la revendication 2, caractérisé en ce que l'organe de manchon (21) a au moins un organe de blocage (25) qui coopère avec une cavité quelconque d'une série de cavités (24, 24a) formées dans l'organe en forme de tige ou de tube (20), les cavités permettant l'ajustement de l'organe appui-tête à la position voulue en hauteur dans la plage d'ajustement délimitée par l'organe de manchon et les cavités.

4. Organe appui-tête selon la revendication 3, caractérisé en ce que l'organe (20) en forme de tige ou de tube est constitué d'un étrier ayant deux branches descendant dans le dossier par des dispositifs (19) de support placés dans le bâti (12), si bien que l'organe en forme de tige ou de tube au moins passe dans un organe de manchon (21).

5. Organe appui-tête selon la revendication 4, caractérisé en ce que l'organe de manchon (21) a un second organe de blocage (28) qui permet le soulèvement de l'organe appui-tête dans une plage d'ajustement, mais qui le bloque dans l'autre sens, le second dispositif de blocage pouvant être libéré par abaissement de l'organe appui-tête.

6. Organe appui-tête selon la revendication 5, caractérisé en ce que le second organe de blocage (28) peut être libéré par l'organe appui-tête lorsque celui-ci pivote vers l'avant dans la direction longitudinale du véhicule.
